# EUROPÄISCHE PATENTANMELDUNG

(11) **EP 0 934 916 A1**
(43) Veröffentlichungstag der Anmeldung: **11.08.1999**
(21) Anmeldenummer: 99101922.5
(22) Anmeldetag: 29.01.1999
(51) Int. Cl.: C04B 35/18, C04B 35/44

(54) **Verfahren zur Verwertung von aluminiumhaltigen Reststoffen**

(30) Priorität: 09.02.1998 DE 19805107
(71) Anmelder: euromat GmbH angewandte werkstoff- und prozesstechnologie, 41836 Hückelhoven (DE)
(72) Erfinder: Lugscheider, Erich Prof.Dr., 52074 Aachen (DE); Rass, Ino J. Dr.-Ing., 52062 Aachen (DE); Tadeusz, Rymon-Lipinski Dr.-Ing., 53125 Bonn (DE); Graf, Matthias Dipl.-Ing., 52070 Aachen (DE)
(74) Vertreter: Patentanwälte Rehberg + Hüppe

(57) **Zusammenfassung**

Bei einem Verfahren zur Verwertung von aluminiumhaltigen Reststoffen, insbesondere von Verbundfolien, werden die Reststoffe zerkleinert und oxidiert. Den zerkleinerten Reststoffen wird ein Metalloxid oder eine Mischung mehrerer Metalloxide in Pulverform hinzugefügt, und diese Stoffe werden zu einem homogenen Zwischenprodukt gemischt. Das Zwischenprodukt wird oxidiert und zu einem Sintermaterial versintert.

## Beschreibung

Die Erfindung betrifft ein Verfahren zur Verwertung von aluminiumhaltigen Reststoffen, insbesondere von Verbundmaterialien, indem die Reststoffe zerkleinert und oxidiert werden. Derartige aluminiumhaltige Reststoffe fallen in großer Menge als Verpackungsmaterialien an, insbesondere in Form von Lebensmittelverpackungen, wie sie z.B. für Säfte und andere Getränke eingesetzt werden. Solche Verbundmaterialien bzw. Verbundfolien weisen metallisches Aluminium in Form einer Aluminiumfolie auf. Sie können in der Regel durch Kunststoffbeschichtung kaschiert sein und/oder eine Zelluloseschicht, also eine Papierbahn o. dgl. aufweisen. Der Gehalt an metallischem Aluminium ist in der Regel relativ gering, kann aber auch bis zu 30 oder gar zu 60 Gew.-% ausmachen. Die anderen Komponenten eines solchen Verbundmaterials sind für das vorliegende Verfahren von untergeordneter Bedeutung. Das Verfahren zielt auf die stoffliche Wiedergewinnung und Weiterverwertung des Aluminiums in solchen Verbundmaterialien ab.

Ein Verfahren der eingangs beschriebenen Art zur Verwertung von aluminiumhaltigen Reststoffen sieht deren Zerkleinerung und Verbrennung vor. Dieses Verfahren zielt nicht auf den aluminiumhaltigen Anteil der Reststoffe, sondern auf den Kunststoffanteil der Reststoffe ab und nutzt die Kunststoffe als Brennstoffersatz. So wird beispielsweise der hohe Heizwert des Kunststoffes im Reststoff bei der Zementherstellung im Drehrohrofen genutzt. Dabei wird das im Reststoff enthaltene metallische Aluminium nur zum Teil in oxidischer Form von dem Zement aufgenommen, weil die Passivschichten der Aluminiumfolie eine vollständige Umsetzung verhindern. Immerhin wird aber das im Reststoff enthaltene metallische Aluminium insoweit beseitigt, wodurch Deponieraum und Deponiekosten eingespart werden. Der Anteil an aluminiumhaltigen Reststoffen, der bei der Zementherstellung entsorgt wird, ist im Verhältnis zur produzierten Menge an Zement als sehr klein anzusehen, so daß hier noch erhebliche Aufnahmekapazität für aluminiumhaltige Reststoffe vorhanden ist. Bei dieser Verwertung geht aber das an sich wertvolle metallische Aluminium im Reststoff verloren. Im übrigen ist das Verbrennen von aluminiumhaltigen Reststoffen in der Zementherstellung auch nicht unproblematisch. Es bestehen technische Schwierigkeiten, da es im Feuerraum der dabei eingesetzten Verbrennungsanlagen zum Anbacken grobknolliger metallischer Aluminiumstücke kommt, die den Betrieb empfindlich stören (Heil, 1990).

Der Erfindung liegt die Aufgabe zugrunde, ausgehend von einem Verfahren der eingangs beschriebenen Art das metallische Aluminium in den Reststoffen als wertvollen keramischen Rohstoff nutzbar zu machen.

Erfindungsgemäß wird dies bei einem Verfahren der eingangs beschriebenen Art dadurch erreicht, daß den zerkleinerten Reststoffen ein Metalloxid oder eine Mischung mehrerer Metalloxide in Pulverform hinzugefügt und diese Stoffe zu einem homogenen Zwischenprodukt gemischt werden, und daß das Zwischenprodukt oxidiert und zu einem Sintermaterial versintert wird.

Das in Form einer Aluminiumfolie in dem Reststoff enthaltene Aluminium besteht aus einer Kernschicht aus metallischem Aluminium und Passivschichten im Randbereich aus Aluminiumoxid. Die Passivschicht aus Aluminiumoxid werden mit dem hinzugefügten Metalloxid umgesetzt, wobei die Passivschichten aufgebrochen werden und die metallische Kernschicht der Aluminiumfolie wiederum für einen Oxidationsvorgang, also für die chemische Umwandlung in Oxid unter Sauerstoffzutritt, zugänglich wird. An sich erscheint es widersinnig, elektrolytisch erschmolzenes metallisches Aluminium in den Oxidzustand (I) zu überführen bzw. zurückzuführen. Als Vorbereitungsreaktion für das Umsetzen mit dem Metalloxid kann diese Reaktion (I) jedoch in Kauf genommen und die freiwerdende Reaktionsenthalpie dann beim Oxidieren des Aluminiums (II) sinnvoll genutzt werden. Bei der Durchführung des Verfahrens laufen also folgende Vorgänge ab, die hier prinzipiell vereinfacht dargestellt werden:

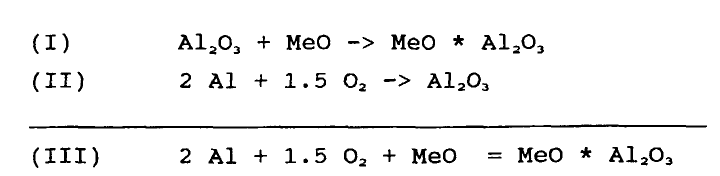

Um diese Reaktionen zu begünstigen, wird den zerkleinerten Reststoffen das Metalloxid (MeO) oder die Mischung mehrerer Metalloxide in Pulverform hinzugefügt. Die so erhaltenen Stoffe werden zu einem homogenen Zwischenprodukt gemischt, um die oben angegebenen Reaktionen zu begünstigen. Das Zwischenprodukt wird im Verbrennungsvorgang zugleich oxidiert und zu einem Sintermaterial versintert.

Insbesondere wird das entstehende Aluminiumoxid mit dem Metalloxid zu einem Reaktionsprodukt umgesetzt und dann das im Reststoff zugänglich werdende metallische Aluminium durch die Oxidation zu Aluminiumoxid und dann mit dem Metalloxid fortlaufend zu dem Reaktionsprodukt umgesetzt wird, bis das metallische Aluminium oder das Metalloxid aufgebraucht sind.

Es versteht sich, daß der Zerkleinerung der aluminiumhaltigen Reststoffe ein Aufbereitungsvorgang vorausgeht, wenn dies erforderlich ist. So können beispielsweise ferromagnetische Materialien, z. B. Metallklammern, durch einen Aussonderungsprozeß aus dem Reststoff herausgeholt werden. Die Zerkleinerung ist auf die Verbesserung der Reaktionsfähigkeit abgestimmt und wird entsprechend durchgeführt. Die Zerkleinerung kann beispielsweise so durchgeführt werden, daß aus den Reststoffen Stücke entstehen, die eine Fläche von etwa 1 cm² und kleiner aufweisen. Es wird eine Berechnung des erforderlichen Mischungsverhältnisses von aluminiumhaltigem Reststoff und Metalloxid durchgeführt, wobei eine Bestimmung des Aluminiumgehaltes des Reststoffes vorzunehmen ist. Die Oxidation kann beispielsweise in einem kontinuierlich betriebenen Drehrohrofen durchgeführt werden, in welchem die zum Reaktionsstart benötigte thermische Energie bereitgestellt wird. Die exotherme Reaktionsenthalpie der Oxidation des metallischen Aluminiums (Delta H = -8,35*10² kJ/mol) und der Kunststoffanteile im Reststoff sind sehr hoch und werden für den Sinterprozeß energetisch genutzt.

Als Metalloxid oder als Metalloxide können Calciumoxid, Titandioxid, Magnesiumoxid und/oder Siliciumdioxid Verwendung finden. Es ist aber auch möglich, als Metalloxid oder als Metalloxide natürliche Rohstoffe auf Oxidbasis, insbesondere Ton, Kaolin, Kalk etc., einzusetzen.

Vorteilhaft ist es, wenn das homogene Zwischenprodukt vor der Oxidation kompaktiert wird. Die Kompaktierung bezieht sich also auf die homogene Mischung aus Reststoff und Metalloxid und kann zur Bildung von Pellets oder Briketts führen. Damit wird das freie Lückenvolumen verringert und das Reaktionsverhalten des Zwischenprodukts bei der Oxidation verbessert. Weiterhin ergibt sich eine Gesamtvolumenverringerung durch die Kompaktierung, so daß eine verbesserte Ausnutzung des Ofenbrennraums möglich ist. Schließlich entsteht ein gut handhabbares Material, welches in verschiedener Form weiterverarbeitet bzw. aufbereitet werden kann.

Die Oxidation wird bei Temperaturen oberhalb 600 °C durchgeführt, wobei auch Temperaturen in der Größenordnung von 1200 bis 1500 °C Anwendung finden können.

Die Aufbereitung der aluminiumhaltigen Reststoffe vor bzw. nach deren Zerkleinerung richtet sich nach dem Gegebenheiten. So ist es beispielsweise möglich bzw. notwendig, daß die zerkleinerten Reststoffe vor der Zugabe des Metalloxids zwecks Abtrennung von Papier, Salzen o. dgl. gewaschen werden.

Andererseits können sich an die Oxidation verschiedene Weiterverarbeitungsschritte anschließen. So ist es möglich, daß das Sintermaterial insbesondere durch Mahlen aufbereitet wird. Dieser Aufbereitungsvorgang zielt darauf ab, das gewonnene Aluminiumoxid, umgesetzt als Reaktionsprodukt mit dem Metalloxid als oxidkeramischen Werkstoff nutzbar zu machen. Dabei ist es weiterhin sinnvoll und aufgrund des Verfahrens ohne weiteres möglich, daß das gemahlene Sintermaterial durch Sieben in einzelne Korngrößenbereiche fraktioniert wird. Das franktionierte Sintermaterial durch ein Formgebungsverfahren mit sich anschließendem nochmaligen Brand zu feuerfesten oder feuerbeständigen Gegenständen weiterverarbeitet werden.

Das erfindungsgemäße Verfahren wird anhand von bereits durchgeführten Ausführungsbeispielen weiter erläutert und beschrieben:

### Beispiel 1:

In einem aluminiumhaltigen Reststoff wurde nach der Abtrennung von Papier festgestellt, daß dieser 14 Gew.-Anteile Aluminium und 86 Gew.-Anteile Polyethylenfolie enthält. Um diesen aluminiumhaltigen Reststoff zu Cordierit zu verarbeiten, wurde der Reststoff zunächst in maximal 1 cm² große Stücke zerkleinert und dann mit einer Mischung von 2 Metalloxiden homogen vermischt. Die Mischung bestand aus Kaolin als Siliciumdioxid-Träger mit 34,8 Gew.-Anteilen Al₂O₃ und 63,4 Gew.-Anteilen SiO₂ sowie einem als MgO-Träger fungierenden Speckstein mit 32 Gew.-Anteilen MgO und 65 Gew.-Anteilen SiO₂. Es wurden also folgende Stoffe in den angegebenen Gew.-Anteilen zusammengebracht:
- Reststoff:: 48,5 Gew.-Anteile
- Kaolin:: 25,3 Gew.-Anteile
- Speckstein:: 26.2 Gew.-Anteile

Diese Komponenten wurden homogen vermischt und zu Pellets mit einem Durchmesser von 30 mm und einem Preßdruck von 50 MPa kompaktiert. Die Oxidation erfolgte in einem anschließenden Brand bei einer Temperatur von 1350 °C, mit einer Aufheizrate von 300 °C/h und einer Haltezeit von 2 Stunden. Die gesinterten Pellets wurden anschließend in Pulverform aufgemahlen. Der entstandene Cordierit kann zur Herstellung von Produkten für die technische Keramik, wie z.B. Heizwendelträger, eingesetzt werden.

### Beispiel 2:

Ein aluminiumhaltiger Reststoff mit einem Aluminiumgehalt von 11 Gew.-Anteilen wurde zu maximal 1 cm² großen Stücken zerkleinert und sodann mit einem als SiO₂-Träger fungierenden Kaolin mit 34,8 Gew.-Anteilen Al₂O₃ und 63,4 Gew.-Anteilen SiO₂ in folgendem Verhältnis homogen gemischt:
- Reststoff:: 84,4 Gew.-Anteile
- Kaolin:: 15,6 Gew.-Anteile

Diese Komponenten wurden homogen gemischt und zu Pellets mit einem Durchmesser von 30 mm unter einem Preßdruck von 50 MPa kompaktiert. In dem sich anschließenden Brand bei einer Temperatur von 1500 °C, einer Aufheizrate von 300 °C/h und einer Haltezeit von 4 Stunden wurde die Oxidation und der Sinterprozeß durchgeführt. Danach wurden die gesinterten Pellets zu Pulver mit einer Korngröße < 0,1 mm aufgemahlen. Dieses Mullitpulver wurde bei der Herstellung feuerfester Gegenstände eingesetzt.

### Beispiel 3:

Für die Herstellung von Spinell (MgO*Al₂O₃) wurde ein aluminiumhaltiger Reststoff mit einem Aluminiumgehalt von 11 Gew.-% eingesetzt. Der Reststoff wurde zuerst auf maximal 0,5 cm² große Stücke zerkleinert und dann mit Magnesiumoxid in folgendem Verhältnis gemischt:
- Reststoff:: 66,9 Gew.-Anteile
- Kaustisches Magnesia:: 23,1 Gew.-Anteile

Vor dem Sinterprozeß wurde die Mischung zu Pellets mit einem Durchmesser von 20 mm und einem Preßdruck von 50 MPa kompaktiert. In dem anschließenden Brand erfolgte bei einer Temperatur von 1800 °C, einer Aufheizrate von 300 °C/h und einer Haltezeit von 1 Stunde die Oxidation und Sinterung. Die gesinterten Pellets wurden zerkleinert und das so erhaltene Spinellpulver bei der Herstellung feuerfester Steine eingesetzt.

### Beispiel 4:

Aus einer Krätze als aluminiumhaltiger Reststoff aus der Sekundärproduktion von Aluminium, also beim Einschmelzen von gebrauchten Aluminiumteilen, mit einem Aluminiumgehalt von 20 Gew.-Anteilen wurde als Metalloxid Calciumhydroxid (Ca(OH)₂) zu Calciumaluminat (CaO*Al₂O₃) weiterverarbeitet. Der aluminiumhaltige Reststoff wurde in Stücke < 0,2 mm zerkleinert und in einem vorgeschalteten Waschvorgang von wasserlöslichen Salzen befreit. Basierend auf einem Aluminiumgehalt von 20 Gew.-% wurde eine Mischung mit folgender Zusammensetzung hergestellt:
- Krätze A:: 66,9 Gew.-Anteile
- Calciumhydroxid:: 23,1 Gew.-Anteile

Die Mischung wurde zu Pellets mit einem Durchmesser von 30 mm und einem Preßdruck von 50 MPa kompaktiert. Der Brand erfolgte bei einer Temperatur von 1300 °C, mit einer Aufheizrate von 600 °C/h und einer Haltezeit von 2 Stunden. An die Oxidation und Sinterung schloß sich eine Zerkleinerung der gesinterten Pellets an.

In dem anliegenden Schaubild ist ein möglicher Kreislauf für die Rückführung und nutzbringende Wiedergewinnung und Weiterverwertung von aluminiumhaltigen Rohstoffen dargestellt:

Der aluminiumhaltige Reststoff 1 in Form von Weichpackungen wird in einer ersten Aufbereitungsstufe 2 von Zellulose bzw. Papier 3 befreit, so daß ein Gemenge 4 aus Aluminium und Kunststoff entsteht. Dieses wird anschließend mit einer Shreddervorrichtung 5 zerkleinert. Dem zerkleinerten Reststoff wird ein Metalloxid 6 oder eine Mischung mehrerer Metalloxide in Pulverform hinzugegeben, und diese Stoffe werden zu einem homogenen Zwischenprodukt 7 zwangsgemischt. Das Zwischenprodukt 7 wird einer Kompaktierstation 8 zugeführt und zu Briketts oder Pellets verdichtet. Diese gelangen in einen Ofen 9, in welchem die Oxidation und der Sintervorgang stattfinden. Die gesinterten Pellets werden ggf. weiterverarbeitet, insbesondere zu Pulver 10 aufgemahlen, welches bei der Herstellung keramischer Feuerfestprodukte in einer entsprechenden Fertigungsstätte 11 eingesetzt wird.

## Patentansprüche

1. Verfahren zur Verwertung von aluminiumhaltigen Reststoffen, insbesondere von Verbundfolien, indem die Reststoffe zerkleinert und oxidiert werden, **dadurch gekennzeichnet**, daß den zerkleinerten Reststoffen ein Metalloxid oder eine Mischung mehrerer Metalloxide in Pulverform hinzugefügt und diese Stoffe zu einem homogenen Zwischenprodukt gemischt werden, und daß das Zwischenprodukt oxidiert und zu einem Sintermaterial versintert wird.

2. Verfahren nach Anspruch 1, **dadurch gekennzeichnet**, daß das im Reststoff enthaltene Aluminiumoxid mit dem Metalloxid zu einem Reaktionsprodukt umgesetzt und dann das im Reststoff zugänglich werdende metallisches Aluminium durch die Oxidation zu Aluminiumoxid und dann mit dem Metalloxid fortlaufend zu dem Reaktionsprodukt umgesetzt wird, bis das metallische Aluminium oder das Metalloxid aufgebraucht sind.

3. Verfahren nach Anspruch 1 oder 2, **dadurch gekennzeichnet**, daß als Metalloxid oder als Metalloxide Calciumoxid, Titandioxid, Magnesiumoxid und/oder Siliciumdioxid Verwendung finden.

4. Verfahren nach Anspruch 1 oder 2, **dadurch gekennzeichnet**, daß als Metalloxid oder als Metalloxide natürliche Rohstoffe auf Oxidbasis, insbesondere Ton, Kaolin, Kalk, Verwendung finden.

5. Verfahren nach Anspruch 1 oder 2, **dadurch gekennzeichnet**, daß das homogene Zwischenprodukt vor der Oxidation kompaktiert wird.

6. Verfahren nach Anspruch 1 oder 2, **dadurch gekennzeichnet**, daß die Oxidation bei Temperaturen oberhalb 600 °C durchgeführt wird.

7. Verfahren nach Anspruch 1 oder 2, **dadurch gekennzeichnet**, daß die zerkleinerten Reststoffe vor der Zugabe des Metalloxids zwecks Abtrennung von Papier, Salzen o. dgl. gewaschen werden.

8. Verfahren nach Anspruch 1 oder 2, **dadurch gekennzeichnet**, daß das Sintermaterial insbesondere durch Mahlen aufbereitet wird.

9. Verfahren nach Anspruch 8, **dadurch gekennzeichnet**, daß das gemahlene Sintermaterial durch Sieben in einzelne Korngrößenbereiche fraktioniert wird.

10. Verfahren nach Anspruch 9, **dadurch gekennzeichnet**, daß das franktionierte Sintermaterial durch ein Formgebungsverfahren mit sich anschließendem nochmaligen Brand zu feuerfesten oder feuerbeständigen Gegenständen weiterverarbeitet wird.
